Europäisches Patentamt

European Patent Office

Office européen des brevets

(11) Veröffentlichungsnummer: **0 116 154**
A2

# (12) EUROPÄISCHE PATENTANMELDUNG

(21) Anmeldenummer: 83112612.3

(22) Anmeldetag: 15.12.83

(51) Int. Cl.³: **B 23 B 51/00**

(30) Priorität: 12.02.83 DE 8304014 U

(43) Veröffentlichungstag der Anmeldung:
22.08.84 Patentblatt 84/34

(84) Benannte Vertragsstaaten:
AT BE CH FR GB IT LI NL

(71) Anmelder: artur fischer forschung
Weinhalde 14 - 18
D-7244 Waldachtal 3 (Tumlingen)(DE)

(72) Erfinder: Fischer, Artur, Dr. h. c.
Weinhalde 34
D-7244 Waldachtal 3/Tumlingen(DE)

(54) Werkzeug zur Herstellung einer Hinterschneidung.

(57) Die Erfindung bezieht sich auf ein Werkzeug (1) zur Herstellung einer Hinterschneidung (8) in einem zylindrisch vorgebohrten Bohrloch (11) in einem festen Werkstoff, bpsw. einer Kunststoffplatte. Das Werkzeug besteht aus einem an seinem Umfang Schneiden (7) aufweisenden und sich zum Schaft hin verjüngenden Fräskopf (6). Um für den Einsatz eines Befestigungselementes (13) ein sehr genaues Bohrloch erstellen zu konnen, weist das Werkzeug einen Anschlagflansch (5) und zwischen dem Anschlagflansch und dem Fräskopf einen zylindrischen Bund (9) auf, dessen Durchmesser dem kleinsten Duchmesser des Fräskopfes entspricht.

F.g 1

EP 0 116 154 A2

EP   1472

### Werkzeug zur Herstellung einer Hinterschneidung

Die Neuerung betrifft ein Werkzeug zur Herstellung einer Hinterschneidung in einem zylindrisch vorgebohrten Bohrloch in einem festen Werkstoff, bspw. einer Kunststoffplatte, bestehend aus einem an seinem Umfang Schneiden aufweisenden und sich zum Schaft hin verjüngenden Fräskopf.

Zum Verankern von Befestigungselementen, an die hohe Sicherheitsanforderungen gestellt werden, ist es bekannt, als Aufnahme für die Befestigungselemente ein in der Bohrlochtiefe konisch erweitertes Bohrloch
vorzusehen. Solche, in der Hauptsache für Ankergrunde, wie Beton, Gasbeton oder dgl. bekannte Bohrvorrichtungen weisen eine Anschlagplatte
mit einer Mulde auf, in der ein am Bohrschaft angeordneter halbrundförmiger Bund gelagert ist. Durch eine Schwenk- und Rührbewegung wird
die konische Hinterschneidung in der Bohrlochtiefe ausgerieben. Diese
Bohrvorrichtung ist dann nicht mehr geeignet, wenn ein sehr kurzes und
genaues Bohrloch in einem festen, kunststoffähnlichen Ankergrund für
das Einsetzen eines Befestigungselementes erwünscht ist.

Der Erfindung liegt die Aufgabe zugrunde, ein Werkzeug zu schaffen, mit
dem in einem festen, kunststoffähnlichen Ankergrund ein kurzes und genaues Bohrloch herstellbar ist.

Neuerungsgemäß wird dies dadurch erreicht, daß das Werkzeug einen Anschlagflansch und zwischen dem Anschlagflansch und dem Fräskopf einen
zylindrischen Bund aufweist, dessen Durchmesser dem kleinsten Durchmesser des Fräskopfes entspricht.

Zunächst wird mit einem herkömmlichen Bohrer ein zylindrisches Loch
vorgebohrt. Danach wird das erfindungsgemäße Werkzeug in die Bohrmaschine eingespannt und der Fräskopf in das vorgebohrte Bohrloch soweit eingeschoben, bis der Anschlagflansch an der Außenfläche des

...

EP · 1472

Werkstückes zur Anlage kommt. Durch seitlichen Druck auf die Bohrmaschine bei gleichzeitiger Rührbewegung wird die Hinterschneidung entsprechend der Konizität des Fräskopfes ausgerieben. Ist die volle
Hinterschneidung erreicht, kommt der zwischen dem Anschlagflansch und
dem Fräskopf angeordnete und dem kleinsten Durchmesser des Fräskopfes
entsprechende Bund am zylindrischen Teil des Bohrloches zur Anlage,
so daß eine genau definierte Hinterschneidung entsprechend der Fräskopfgeometrie entsteht. Das zylindrische Teilstück der Bohrung bleibt
durch den keine Schneiden aufweisenden Bund in seinem Durchmesser bestehen, so daß Befestigungselemente verwendbar sind, deren Drehsicherungsmittel an diesem Bereich wirksam werden.

Das Bohrloch mit der Hinterschneidung ist insbesondere für die Verankerung von Befestigungselementen vorgesehen. Durch die Hinterschneidung
ergibt sich eine sehr starke Aufspreizung, ohne daß dafür ein besonders
hoher Spreizdruck, der unter Umständen zu einer Zerstörung des Werkstückes führen könnte, erforderlich ist. Es ergibt sich somit eine Art
Formschluß, der bei geringstem Spreizdruck sehr hohe Auszugskräfte zuläßt.

In der Zeichnung ist ein Ausführungsbeispiel der Neuerung dargestellt.
Es zeigen:

Figur 1        das Werkzeug

Figur 2        das in der Bohrung mit Hinterschneidung verankerte
               Befestigungselement

Das Werkzeug 1 besteht aus dem in einem Bohrfutter 2 einer Bohrmaschine 3 eingespannten Schaft 4, an dem ein Anschlagflansch 5 zur Tiefenbegrenzung für das Werkzeug 1 angeordnet ist. Der zum Schaft 4 hin sich
konisch verjüngende Fräskopf 6 weist an seinem Umfang Schneiden 7 auf,
mit denen die Hinterschneidung 8 in der Bohrlochtiefe durch seitlichen
Druck auf die Bohrmaschine und gleichzeitiger Rührbewegung ausreibbar
ist. Zwischen dem Anschlagflansch 5 und dem Fräskopf 6 ist ein zylindri-

...

0116154

scher Bund 9 angeordnet, dessen Höhe die Länge des zylindrischen Teilstückes 10 des Bohrloches 11 bestimmt. Gleichzeitig dient dieser Bund 9 bei der Rührbewegung als Begrenzung für den Fräskopf 6.

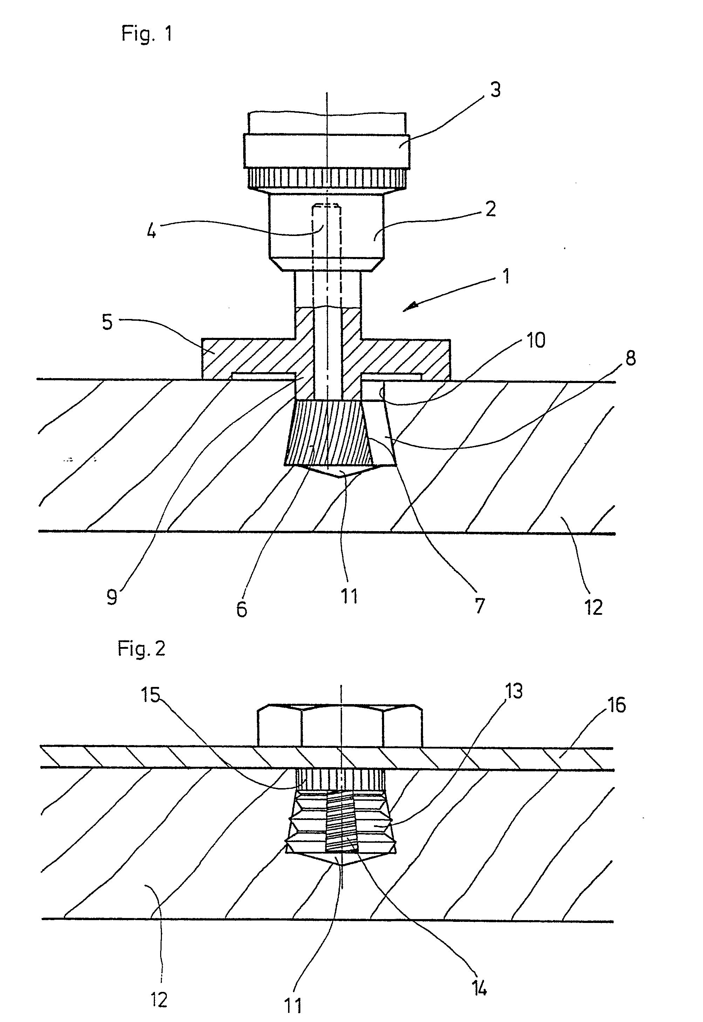

In der Darstellung der Figur 2 ist in diesem hinterschnittenen Bohrloch 11 des Werkstückes 12 ein Befestigungselement 13 eingesetzt, das durch Eindrehen einer Befestigungsschraube 14 aufspreizbar ist. Die beim Eindrehen der Schraube notwendige Sicherung gegen Verdrehen des Befestigungselementes wird durch eine Rändelung 15 eines Teilstückes des Befestigungselementes 13 erreicht, die sich in der Wandung des zylindrischen Teilstückes 10 des Bohrloches 11 eindrückt. Mit der Befestigungsschraube 14 wird dann die Platte 16 gegen das Werkstück 12 verspannt.

artur fischer forschung

7244 Tumlingen / Waldachtal 3

11. Februar 1983
Ju/Woe

- 1 -

EP 1472

S c h u t z a n s p r u c h

Werkzeug zur Herstellung einer Hinterschneidung in einem zylindrisch vorgebohrten Bohrloch in einem festen Werkstoff, bpsw. einer Kunststoffplatte, bestehend aus einem an seinem Umfang Schneiden aufweisenden und sich zum Schaft hin verjüngenden Fräskopf, dadurch gekennzeichnet, daß das Werkzeug einen Anschlagflansch und zwischen dem Anschlagflansch und dem Fräskopf einen zylindrischen Bund aufweist, dessen Durchmesser dem kleinsten Durchmesser des Fräskopfes entspricht.

1/1

Fig. 1

Fig. 2